# NEUE EUROPÄISCHE PATENTSCHRIFT

(11) **EP 0 210 475 B2**
(45) Veröffentlichungstag und Bekanntmachung des Hinweises auf die Entscheidung über den Einspruch: **15.09.1999**
(45) Hinweis auf die Patenterteilung: 30.09.1992
(21) Anmeldenummer: 86109230.2
(22) Anmeldetag: 07.07.1986
(51) Int. Cl.: B29C 45/27, B29C 45/38

(54) **Verfahren und Vorrichtung zum Herstellen eines Spritzgiessteils**
Method and apparatus for manufacturing an injection-moulded object
Procédé et dispositif pour fabriquer un objet moulé par injection

(30) Priorität: 25.07.1985 DE 3526632
(43) Veröffentlichungstag der Anmeldung: 04.02.1987
(73) Patentinhaber: Krauss-Maffei Aktiengesellschaft, 80997 München (DE)
(72) Erfinder: Eichlseder, Martin, D-8399 Tettenweis (DE); Preuss, Ingo, D-8000 München 50 (DE)

(56) Entgegenhaltungen:
- CH-A- 453 671
- DE-A- 2 321 940
- DE-A- 2 838 634
- DE-C- 651 725
- GB-A- 2 074 087
- US-A- 3 013 303
- US-A- 3 989 436
- PATENT ABSTRACTS OF JAPAN, Band 4, Nr. 45 (M-6)[527], Seite 89 M 6; & JP-A-55 15 834 (DAIICHI SEIKOU K.K.) 04-02-1980
- PATENT ABSTRACTS OF JAPAN, Band 9, Nr. 124 (M-383)[1847], 29. Mai 1985; & JP-A-60 9721 (DAICEL KAGAKU KOGYO K.K.) 18-01-1985

## Beschreibung

Die Erfindung bezieht sich auf ein Verfahren und eine Vorrichtung zum Herstellen eines Spritzgießteils, insbesondere einer Informationsträgerscheibe, gemäß dem Oberbegriff des Patentanspruchs 1.

Der Angußtrichter dient dabei aufgrund seiner speziellen Formgebung dazu, den aus dem Kanal der Spritzdüse senkrecht zum Formhohlraum auftreffenden verflüssigten Kunststoff gleichmäßig über den Umfang verteilt um 90^{o} um- und in den Formhohlraum einzuleiten. Das beim Spritzvorgang im Angußhohlraum gebildete Angußteil muß nach der Abkühlphase aus dem Formprodukt herausgetrennt und entfernt werden.

Nach der DE-A 28 38 634 ist es bereits bekannt, bei der Herstellung eines ringförmigen Gußkörpers im Spritzgießverfahren das einstückig mit dem Gußkörper zusammenhängende Angußteil durch Herausstanzen vom Gußkörper abzutrennen und mittels eines Angußauswerfers auszuwerfen. Zum Herausstanzen des Angußteils wird die zweiteilige Spritzgießform geöffnet, indem die beiden Teile der Form axial voneinander entfernt werden. Die Trennung der beiden Formteile erfolgt in zwei Schritten, und zwar zunächst nur soweit, daß das in einer Hinterschneidung gehaltene Angußteil in den entstandenen Freiraum mittels eines hydraulisch betätigten rohrförmigen Auswerfers hineingestanzt wird, wo es mittels der Hinterschneidung in seiner axialen Lage noch gehalten wird. Sodann wird die Form vollständig geöffnet und das Angußteil durch einen im rohrförmigen Auswerfer geführten Auswerferstift aus der Hinterschneidung ausgestoßen, so daß es in der Trennebene des Spritzgießwerkzeuges nach unten fällt.

Bei der Herstellung von Informationsträgerscheiben, wie z.B. Ton- und Bildträgerscheiben, im Spritzgießverfahren werden höchste Ansprüche an Präzision und Staubfreiheit gestellt. Besondere Probleme in dieser Hinsicht treten beim Herstellen der zentralen Öffnung durch das Herausstanzen des Angußteils aus der Scheibe auf, wie es z.B. nach der oben angezogenen DE-A 28 38 634 der Fall ist.

Durch den Stanzvorgang muß zunächst in Kauf genommen werden, daß die Toleranzgrenzen des Paßdurchmessers der Öffnung größer sind als diejenigen der übrigen Abmessungen der Scheibe. Auch die Oberfläche der gestanzten Öffnung ist wesentlich rauher als die der übrigen spritzgegeossenen Oberfläche der Scheibe. Die beim Stanzen zwangsläufig anfallenden Staubpartikel können den gespritzten Artikel beeinträchtigen. Insbesondere kann sich bei der Herstellung von Informationsträgerscheiben auf der bei diesem Herstellungsverfahren innerhalb des Spritzgießwerkzeuges verwendeten Matrizenplatte Staub ablagern, der beim folgenden Spritzvorgang in das Produkt eingelagert würde.

Eine so hergestellte Scheibe wäre in ihrer Wiedergabequalität stark beeinträchtigt, was bis zur Unbrauchbarkeit der Scheibe führen kann. Durch den Stanzvorgang entstehen außerdem Spannungen, die sich nachteilig auf das Produkt auswirken können.

Aus der US-A-3 013 303 ist ebenfalls ein Verfahren zum Herstellen eines Spritzgießteils bekannt, bei dem ein Angußteil vom Spritzgießteil abgetrennt wird. Hierbei erfolgt das Abtrennen jedoch nicht durch Herausstanzen des Angußteils sondern längs einer radial verlaufenden Trennfläche, wobei allerdings keine Öffnung im Spritzgießteil erzeugt wird. Die Öffnung ergibt sich vielmehr unabhängig vom Anguß durch eine Abkröpfung im zentralen Bereich des Spritzgießteils. Wie nach der De-A 28 38 634 ist es auch hier erforderlich, die Spritzgießform zum Auswerfen des Angußteils zu öffnen, so daß das Spritzgießteil ebenfalls durch Staubablagerungen beeinträchtigt werden kann.

Der Erfindung liegt die Aufgabe zugrunde, bei einem Spritzgießteil, das in einem Spritzgießwerkzeug über einen Anguß hergestellt wird, insbesondere einer Informationsträgerscheibe, und bei dem anschließend das Angußteil zu entfernen ist und hierdurch eine Öffnung erzeugt wird, diese Öffnung so zu gestalten, daß deren Paßdurchmesser ein Höchstmaß an Präzision mit engen Toleranzgrenzen und deren Oberfläche eine hohe Qualität aufweist, wobei die Spannungen im Bereich der Öffnung so gering wie möglich gehalten werden sollen.

Diese Aufgabe wird gemäß den Merkmalen des Patentanspruchs 1 gelöst. Hiernach wird der überwiegende Teil der Öffnungslänge im Spritzgießverfahren hergestellt und somit ein genauer Paßdurchmesser mit hoher Oberflächengüte erzielt. Der Verbindungsbereich zwischen dem Spritzgießteil und dem Angußteil kann dabei so gering gewählt werden, daß der Querschnitt für den Durchtritt des verflüssigten Kunststoffs gerade noch ausreicht und die Trennkante den Paßdurchmesser nicht stört.

In vorteilhafter Ausbildung der Erfindung sind die axiale Versetzung und der Durchmesser des überstehenden Teils des Angußteiles so gewählt, daß beim Abtrennen des Angußteils von dem Spritzgießteil eine im Winkel von 45^{o} zur Ebene der Öffnung geneigte Trennkante entsteht und/oder der spritzgegossene Teil 70 % und der abzutrennende Teil 30 % der axialen Länge der Öffnung betragen.

Anspruch 4 gibt eine geeignete Vorrichtung zur Durchführung des erfindungsgemäßen Verfahrens an. Mit einer derartigen Vorrichtung kann das Angußteil sowohl im geschlossenen als auch bei geöffnetem Spritzgießwerkzeug vom Spritzgießteil abgetrennt und entfernt werden. Das Angußteil wird vom Spritzgießteil dadurch getrennt, daß die Hülse mit der konischen Verengung unter Mitnahme des Auswerfers vom Spritzgießteil wegbewegt wird und durch die im Flansch des Angußteils gebildete Hinterschneidung das Angußteil, welches gegen das Spritzgießwerkzeug abgestützt ist, mitgenommen wird. Die Angußentnahme kann sowohl bei geschlossenem als auch bei geöffnetem Werkzeug erfolgen. In letzterem Fall wird das Spritzgießteil durch das Angußteil bis zu dessen Entnahme durch einstückige Verbindung sicher gehalten, so daß keine besondere Halterung, wie z.B. eine Hinterschneidung am Spritzgießteil, erforderlich ist.

Das Angußteil selbst wird bis zum Schluß des Ausstoßvorganges durch die weitere Verengung zur zentralen Aufnahme des Angußteils ebenfalls sicher gehalten.

Durch das Entfallen eines Stanzvorganges gibt es keinen Stanzkantenverschleiß und die Staubbildung wird weitestgehend vermieden. Durch den Wegfall eines Stanzstempels im Werkzeug steht außerdem mehr Platz für die Kühlung im Bereich der Einspritzdüse bzw. des Angußteiles zur Verfügung.

Durch die größere Bemessung des Durchmessers der beweglichen Hälfte gegenüber dem Durchmesser der feststehenden Hälfte des Spritzgießwerkzeuges gemäß Anspruch 5 wird eine vorteilhafte Neigung der Trennkante wie z.B. nach Anspruch 2 erzielt.

In vorteilhafter Ausbildung der Erfindung ist die innerhalb der feststehenden Hälfte des Spritzgießwerkzeuges angeordnete Buchse, deren Außendurchmesser der Kontur der Öffnung entspricht, axial verschieb- und arretierbar angeordnet. Durch axiales Verschieben der Buchse ist die spritzgegossene Öffnungslänge, wie z.B. nach Anspruch 3, wählbar.

Die Merkmale des Oberbegriffs des Patentanspruchs 1 sind bekannt durch offenkündige Vorbenutzung und Verkauf eines gerätes ohne Auflage von Geheimhaltungsverpflichtungen.

In der Zeichnung ist ein Ausführungsbeispiel der Erfindung dargestellt. Es zeigen
- Fig. 1: einen Teil-Längsschnitt durch ein Spritzgießwerkzeug mit einem Spritzgießteil und einem Angußteil,
- Fig. 2: einen Ausschnitt A gemäß Fig. 1 in vergrößerter Darstellung,
- Fig. 3: eine Schnittdarstellung gemäß Fig. 1, welche das Abtrennen des Angußteils vom Spritzgießteil zeigt,
- Fig. 4: die linke, axial bewegliche Hälfte des Spritzgießwerkzeugs mit dem abgetrennten Angußteil, unmittelbar vor dem Auswerfen.

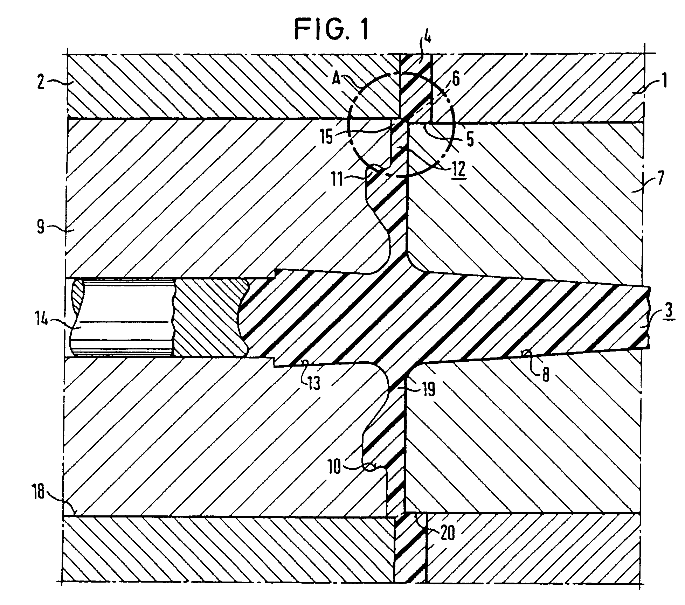

Das in Fig. 1 ausschnittweise dargestellte Spritzgießwerkzeug besteht im wesentlichen aus einer feststehenden Hälfte 1 und einer axial beweglichen Hälfte 2 mit einem Innendurchmesser 18. Zwischen diesen beiden Hälften ist ein Hohlraum gebildet, der durch ein Angußteil 3 mit einem Flansch 12 und ein Spritzteil 4 mit einer Öffnung 5 ausgefüllt ist. Beide Teile sind durch den Spritzgießvorgang an einer Verbindungsstelle 6 einstückig miteinander verbunden.

Innerhalb der feststehenden Hälfte 1 ist eine axial verschiebbare und arretierbare Buchse 7 mit einem Außendurchmesser 20 angeordnet. Sie weist im Inneren einen Angußtrichter 8 auf. Ihr Außendurchmesser 20 entspricht der Kontur der Öffnung 5 im Spritzgießteil 4.

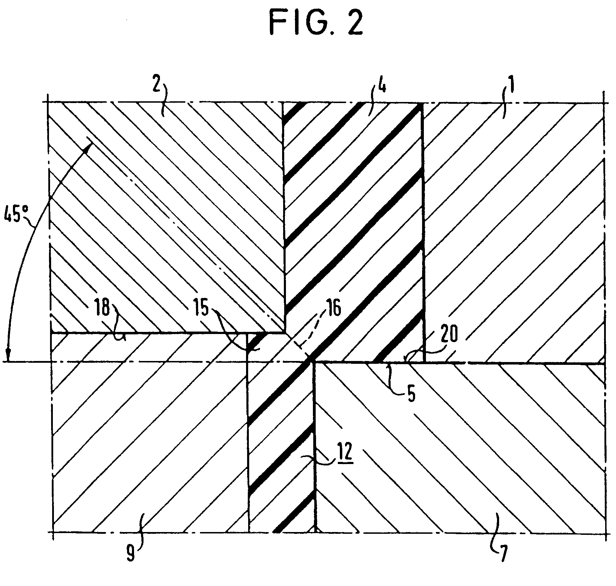

Innerhalb der beweglichen Hälfte 2 ist eine axial bewegliche Hülse 9 mit einer konischen Verengung 10 zur Bildung einer Hinterschneidung 11 in dem Flansch 12 des Angußteils 3 und mit einer weiteren Verengung 13 zur zentralen Aufnahme des Angußteils 3 vorgesehen. Innerhalb der Hülse 9 ist ein axial beweglicher Auswerfer 14 zum Auswerfen des Angußteils 3 geführt. Der Innendurchmesser 18 der beweglichen Hälfte 2 ist größer als der Außendurchmesser 20 der Buchse 7 und entspricht dem Durchmesser eines axial überstehenden Teils 15 des Flansches 12 des Angußteiles 3. Wie insbesondere aus der vergrößerten Darstellung gem. Fig. 2 ersichtlich, ergibt sich eine im Winkel von 45^{o} zur Ebene der Öffnung 5 geneigte Trennkante 16.

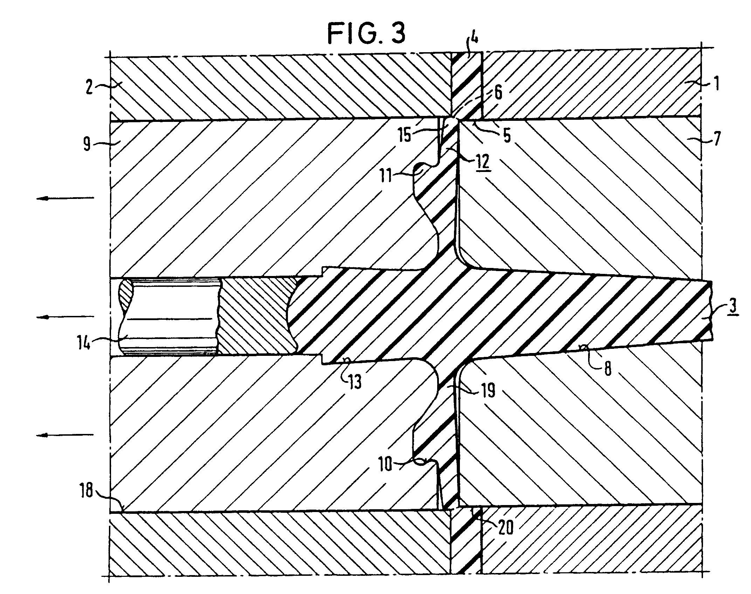

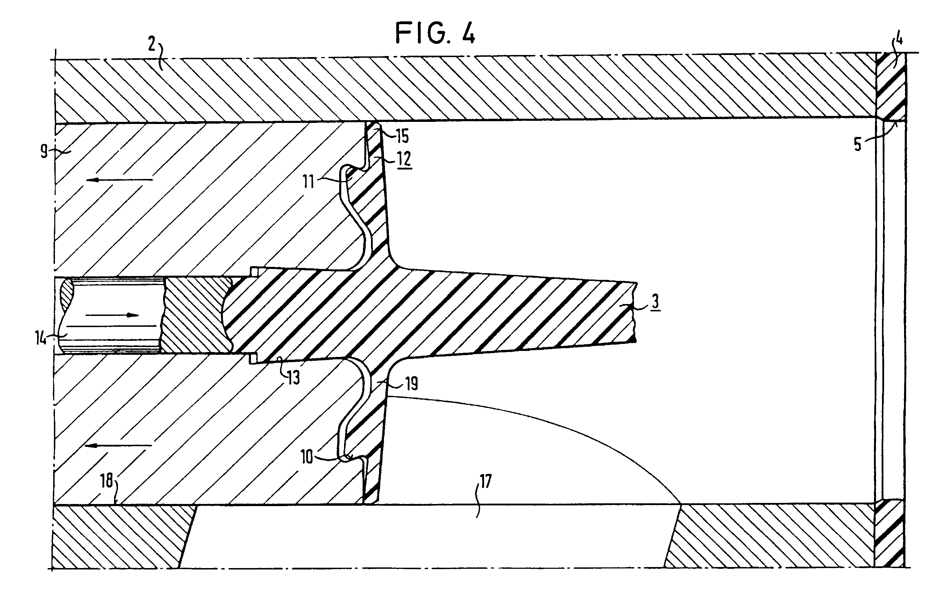

Nach dem Spritzgießvorgang wird die Hülse 9 gemäß Fig. 3 in Pfeilrichtung nach links bewegt und nimmt dabei das Angußteil 3 mit. Durch das Anhaften des Angußteils 3 am Spritzgießteil 4 wird der Flansch 12 des Angußteils 3 zunächst auf Biegung beansprucht, so daß die Hinterschneidung 11 in die konische Verengung 10 hineingepreßt wird und dadurch das Angußteil 3 sicher von der Hülse 9 gehalten ist. Durch weiteres Bewegen der Hülse 9 in Pfeilrichtung wird nun das Angußteil 3 an der Verbindungsstelle 6 im Verlauf der Trennkante 16 vom Spritzgießteil 4 getrennt. Gemäß Fig. 4 wird die Hülse 9 innerhalb der beweglichen Hälfte 2 weiter in Pfeilrichtung bis in den Bereich einer Öffnung 17 bewegt. Der Auswerfer 14 wird nun in Pfeilrichtung nach rechts bewegt und damit das Angußteil aus den Verengungen 10 und 13 der Hülse 9 ausgestoßen, so daß es durch die Öffnung 17 aus dem Spritzgießwerkzeug herausfallen kann. Die Verengung 13 ist dabei länger im Eingriff als die Verengung 10, so daß das Angußteil 3 bis zum Ende des Ausstoßvorgangs sicher in der Hülse 9 gehalten wird.

Das Ausstoßen des Angußteils 3 wird dadurch erleichtert, daß infolge der zentralen Krafteinleitung durch den Auswerfer 14 die Biegung des Flansches nun umgekehrt erfolgt, wie aus Fig. 4 ersichtlich ist. Hierdurch wird die Hinterschneidung 11 des Angußteils 3 entlastet und damit dessen Ausstoßen erleichtert, ohne daß schädlicher Staub infolge Abschabens des Kunststoffs an der Hinterschneidung entsteht.

Der Hinterschneidungswinkel kann auf diese Weise größer als üblich ausgeführt werden. Das Ausstoßen des Angußteils wird zusätzlich durch das Schrumpfen infolge der Abkühlung erleichtert.

Das Entfernen des Angußteils 3 wird durch eine Einschnürung 19 im Flansch 12 an dessen Ansatz am Angußkörper begünstigt, da der Flansch 12 hierdurch eine größere Elastizität erhält.

Durch gleichzeitiges oder anschließenden Öffnen des Spritzgießwerkzeuges, indem nämlich die bewegliche Hälfte 2 ebenfalls in Pfeilrichtung nach links bewegt wird, kann das hierdurch freiwerdende und mit seiner Öffnung 5 auf der Buchse 7 sitzende Spritzgießteil 4 zweckmäßig mittels einer nicht dargestellten Vorrichtung automatisch entnommen werden. Nach dem Schließen des Werkzeuges kann der nächste Spritzgießvorgang erfolgen.

Das Entnehmen des Angußteils und des Spritzgießteils kann aber auch erfolgen, indem die bewegliche Hälfte 2 und die Hülse 9 mit dem Auswerfer 14 zusammen mit dem Angußteil 3 und dem damit einstückig verbundenen Spritzgießteil 4 in Pfeilrichtung nach links bewegt wird. In diesem Falle wird das Spritzgießteil 4 von dem Angußteil 3 gehalten, das noch einstückig mit dem Spritzgießteil 4 verbunden ist.

Nun greift und fixiert eine automatische Entnahmevorrichtung, die hier nicht dargestellt ist, das Spritzgießteil 4 und gibt die Bewegung zum Abtrennen des Angußteils vom Spritzgießteil, wie oben beschrieben, frei.

Ist das Angußteil 3 vom Spritzgießteil 4 getrennt, führt die Entnahmevorrichtung eine axiale Bewegung in Richtung auf die feststehende Hälfte 1 hin aus. Anschließend klappt sie über einen Drehpunkt mit dem Spritzgießteil 4 aus dem Werkzeugbereich heraus. Da die Bewegung am Schwenkdrehpunkt außerhalb des Werkzeugbereiches erfolgt, wird zur Entnahme des Spritzgießteils 4 nur ein kleiner Werkzeugöffnungsweg benötigt.

## Patentansprüche

1. Verfahren zum Herstellen eines Spritzgießteils (4) aus thermoplastischem Kunststoff, insbesondere einer Informationsträgerscheibe, mittels eines im wesentlichen zweiteiligen Spritzgießwerkzeugs mit Formhälften (1 ; 2) mit einem Formhohlraum zur Aufnahme und einem Angußtrichter (8) zum Angießen des Spritzgießteils (4), wobei dieses nach dem Spritzgieß- und Abkühlvorgang mit einem Angußteil (3) verbunden ist und durch anschließendes Abtrennen des Angußteils (3) von dem Spritzgießteil (4) in diesem eine entsprechende Öffnung (5) erzeugt wird, wobei die Öffnung (5) zum überwiegenden Teil ihrer axialen Erstreckung durch Spritzgießen hergestellt wird und das Abtrennen des Angußteils (3) vom Spritzgießteil (4) im Bereich des restlichen Teils der axialen Erstreckung der Öffnung (5) erfolgt, wobei dieser Teil durch axiale Versetzung des Angußteils (3) gegenüber dem Spritzgießteil (4) gebildet ist, und das Angußteil (3) lösbar mit eine Hülse (a) verbunden ist, dadurch gekennzeichnet, daß die Öffnung (5) nur überwiegenden Teil über axialen Gestruckung durch Spritzgießen im Paßdurchmesser hergestellt und das Angußteils (3) durch Wegbewegen der Hülse (9) vom Spritzgeißteil (4) getrennt wird.

2. Verfahren nach Anspruch 1, dadurch gekennzeichnet, daß die axiale Versetzung und der Durchmesser des überstehenden Teiles (15) des Angußteils (3) so gewählt sind, daß beim Abtrennen des Angußteils (3) von dem Spritzgießteil (4) eine im Winkel von 450 zur Ebene der Öffnung (5) geneigte Trennfläche (16) entsteht.

3. Verfahren nach Anspruch 1 und 2, dadurch gekennzeichnet, daß der spritzgegossene Teil 70 % und der abzutrennende Teil 30 % der axialen Länge der Öffnung (5) betragen.

4. Vorrichtung zur Durchführung des Verfahrens nach den Ansprüchen 1 bis 3 mit einer feststehenden und einer beweglichen Formhälfte (1 2), einer Buchse (7) innerhalb der feststehenden Formhälfte (1), wobei die Buchse (7) im Innern einen Angußtrichter (8) aufweist, einer Hülse (9) mit einer Hinterschneidung (10) und mit einer Verengung (13) zur zentralen Aufnahme des Angußteils (3), in der ein axial beweglicher Auswerter (14) zum Auswerten des Angußteils (3) geführt ist, dadurch gekennzeichnet, daß der Außendurchmesser (20) der Buchse (7) der Kontur des spritzgegossenen Teils einer zentralen Ausnehmung (5) entspricht und die Buchse (7) sich axial über die feststehende` Hälfte (1) hinaus erstreckt und der Innendurchmesser (18) der beweglichen Hälfte (2) dem Durchmesser des axial überstehenden Teils (15) des Angußteils (3) entspricht, wobei die Hülse (9) vom Spritzgießteil (4) wegbewegbar ist.

5. Vorrichtung nach Anspruch 4, dadurch gekennzeichnet, daß der Innendurchmesser (18) der beweglichen Hälfte (2) größer als der Außendurchmesser (20) der Buchse (7) ist.

6. Vorrichtung nach Anspruch 4 und 5, dadurch gekennzeichnet, daß die Buchse (7) axial verschieb- und arretierbar angeordnet ist.

## Claims

1. A method of producing an injection moulded part (4) from thermoplastic material, particularly a data carrier plate, by means of a substantially two-part injection moulding tool with mould halves (1, 2) with a mould cavity for receiving and a pouring-in funnel (8) for casting the injection moulded part (4), whereby this latter, following the injection moulding and cooling-down processes, is connected to a cast-on part (3) and, by subsequent separation of the cast-on part (3) from the injection moulded part (4), a corresponding aperture (5) is formed in this latter, whereby the aperture (5) is, over the predominant part of its axial extension, produced by injection moulding while the separation of the cast-on part (3) from the injection moulded part (4) takes place in the region of the remaining part of the axial extension of the aperture (5), this part being formed by axial offsetting of the cast-on part (3) in relation to the injection moulded part (4), the cast-on part (3) being separably connected to a sleeve (9), characterised in that over the predominant part of its axial extension, the aperture (5) is injection moulded in its fitting diameter, the cast-on part (3) being separated from the injection moulded part (4) by the sleeve (9) being moved away.

2. A method according to claim 1, characterised in that the axial offset and the diameter of the protruding part (15) of the cast-on part (3) are so chosen that upon separation of the cast-on part (3) from the injection moulded part (4) a separation surface (16) arises which is inclined to the plane of the aperture (5) by an angle of 45°.

3. A method according to claims 1 and 2, characterised in that the injection moulded part and the part to be separated respectively constitute 70% and 30% of the axial length of the aperture (5).

4. An apparatus for carrying out the method according to claims 1 to 3 with a stationary and a movable mould half (1, 2), a bushing (7) inside the stationary mould half (1), the bushing (7) having inside it a cast-on funnel (8), a sleeve (9) with an under cut (10) and with a constriction (13) for centrally receiving the cast-on part, in which an axially movable ejector (14) is guided to eject the cast-on part (2), characterised in that the outside diameter (20) of the bushing (7) corresponds to the outline of a central recess (5) in the injection moulded part and the bushing (7) extends axially outwards over the stationary half (1) while the inside diameter (18) of the movable half (2) corresponds to the diameter of the axially protruding part (15) of the cast-on part (3), the sleeve (9) being removable away from the injection moulded part (4).

5. An apparatus according to claim 4, characterised in that the inside diameter (18) of the movable half (2) is greater than the outside diameter (20) of the bushing (7).

6. An apparatus according to claims 4 and 5, characterised in that the bushing (7) is disposed for axial displacement and is adapted to be locked in place.

## Revendications

1. Procédé de fabrication d'une pièce moulée par injection (4) en matière thermoplastique, en particulier d'un disque support d'informations, au moyen d'un outil de moulage par injection constitué essentiellement par deux parties, comportant des demi-moules (1; 2) présentant un espace creux destiné à recevoir la pièce moulée par injection (4) et un canal conique (8) d'injection, destiné à amorcer l'injection de la pièce moulée par injection (4), celle-ci étant reliée, après l'opération d'injection et l'opération de refroidissement, à une carotte d'injection (3) et, par une séparation postérieure de la carotte d'injection (3) d'avec la pièce moulée par injection (4), une ouverture correspondante (5) étant réalisée, l'ouverture (5) étant réalisée par moulage par injection en ce qui concerne la partie prépondérante de son étendue axiale, et la séparation de la carotte d'injection (3) d'avec la pièce moulée par injection (4) s'effectuant dans la zone de la partie restante de l'extension axiale de l'ouverture (5), cette partie étant formée par le décalage axial de la carotte d'injection (3) par rapport à la pièce moulée par injection (4) et la carotte d'injection (3) étant réunie, de façon détachable, avec un manchon (9), caractérisé en ce que, en ce qui concerne la partie prépondérante de son étendue axiale, l'ouverture (5) soit, par injection, obtenue avec un diamètre calibré et qu'en écartant le manchon (9) on sépare la carotte d'injection (3) d'avec la pièce moulée par injection (4).

2. Procédé selon la revendication 1, caractérisé en ce que le décalage axial, et le diamètre de la partie (15) de la carotte d'injection (3) qui dépasse sont choisie de façon telle que lors de la séparation de la carotte d'injection (3) d'avec la pièce moulée d'injection (4), on obtienne une surface de séparation (16) inclinée avec un angle de 45° par rapport au plan de l'ouverture (5).

3. Procédé selon la revendication 1 ou 2, caractérisé en ce que la pièce moulée couvre 70% de la longueur axiale de l'ouverture (5), et la partie qui doit être détachée en couvre 30%.

4. Dispositif destiné a' l'exécution du procédé selon les revendications 1 à 3, comportant un demi-moule fixe et un demi-moule mobile (1; 2), un manchon (7) situé à l'intérieur du demi-moule fixe (1), le manchon (7) présentant à l'intérieur un canal conique (8) d'amorce d'injection, un manchon (9) comportant une contre-dépouille (10) et un rétrécissement (13) destiné à recevoir de façon centrale la carotte d'injection (3), dispositif dans lequel est guidé un éjecteur (14) mobile axialement pour éjecter la carotte d'éjection (3) , dispositif caractérisé en ce que le diamètre extérieur (20) du manchon (7) correspond au contour de la partie moulée par injection d'un évidement central, et en ce que le manchon (7) s'étend axialement sur toute la longueur de la moitié fixe (1) et en ce que le diamètre intérieur (18) de la moitié mobile (2) correspond au diamètre de la partie (15) dépassant axialement de la carotte d'injection (3), ce qui permet de déplacer le manchon (9) pour l'écarter de la pièce moulée par injection (4).

5. Dispositif selon la revendication 4, caractérisé en ce que le diamètre intérieur (18) de la moitié mobile (2) est plus grand que le diamètre extérieur (20) du manchon (7).

6. Dispositif selon les revendications 4 et 5, caractérisé en ce que le manchon (7) est disposé de manière à pouvoir être déplacé axialement et être mis en butée.
